# EUROPEAN PATENT SPECIFICATION

(11) **EP 4 487 985 B1**
(45) Date of publication and mention of the grant of the patent: **25.03.2026**
(21) Application number: 24185038.7
(22) Date of filing: 27.06.2024
(51) Int. Cl.: B23K 9/32, A41D 19/00, A47L 5/00, B08B 15/04, B28D 7/02

(54) **WELDING FUME COLLECTION APPARATUS, AND FUME COLLECTION SYSTEM WITH SUCH APPARATUS**
SCHWEISSRAUCHSAMMELVORRICHTUNG, UND RAUCHSAMMELSYSTEM MIT EINER SOLCHEN VORRICHTUNG
APPAREIL DE COLLECTE DE FUMÉES DE SOUDAGE ET SYSTÈME DE COLLECTE DE FUMÉES AVEC UN TEL APPAREIL

(30) Priority: 27.06.2023 US 202363510472 P; 25.06.2024 US 202418753728
(43) Date of publication of application: 08.01.2025
(73) Proprietor: Illinois Tool Works Inc., Glenview IL 60025 (US)
(72) Inventor: CENTNER, Robert J., Glenview, 60025 (US)
(74) Representative: HGF

(56) References cited:
- WO-A1-2021/156709
- DE-U1- 202011 002 390
- JP-A- 2018 204 942
- JP-A- H11 129 074

## Description

The present invention relates generally to welding and, more particularly, to a welding fume collection system and to a fume collection system comprising such welding fume collection apparatus, see claims 1 and 7.

### BACKGROUND

A wide range of industrial, commercial, hobby and other applications result in airborne components that can be removed with proper extraction and filtering. Metal working operations, for example, including cutting, welding, soldering, assembly, and other processes may generate smoke, particulate, and fumes. In some shops it may be convenient simply to open ambient air passages or to use negative pressure or discharge air from fans to maintain relatively clean air spaces. In other applications, cart-type fume extractors are used. In industrial settings, more complex fixed systems may be employed for extracting fumes from specific works cells, metal working locations, and so forth. In other settings, such as machine shops, woodworking shops, worksites where cutting, sanding and other operations are performed, dust, fumes, particulate and other types of airborne components may be generated that it may be desirable to collect and extract from work areas and controlled spaces. DE202011002390U1 relates to a device for attaching a suction channel to a guide hand and suction device. JP2018204942A relates to a push unit for push-pull type ventilation device and push-pull type ventilation device. JPH11129074A (describing the preamble of claims 1 and 7) relates to a light blocking mask for welding, or hood for fume using for torch of welding device. WO2021156709A1 relates to a glove for a welding and/or cutting system.

### SUMMARY

According to a first aspect of the present invention, a welding fume collection apparatus is defined in claim 1. according to a second aspect of the present invention, a fume collection system with such welding fume collection apparatus is defined in claim 7.

Further preferred embodiments of the first and second aspects of the present invention are defined in the dependent claims.

### BRIEF DESCRIPTION OF THE DRAWINGS

These and other features, aspects, and advantages of the present invention will become better understood when the following detailed description is read with reference to the accompanying drawings in which like characters represent like parts throughout the drawings, wherein:
FIG. 1 illustrates an example fume extraction system including fume extraction apparatus, in accordance with aspects of this disclosure.
FIG. 2 is a top view of example wearable article, in the form of a welding glove, having a fume inlet attached to the wearable article and a fume duct configured to couple the fume inlet to a suction source, in accordance with aspects of this disclosure.
FIG. 3 is a side view of the example wearable article, fume inlet, and fume duct of FIG. 2.
FIG. 4 illustrates another example fume extraction system, in which multiple fume inlets attached to wearable articles are fluidly coupled via a fume duct to a suction source, in accordance with aspects of this disclosure.
FIG. 5 illustrates another example fume extraction system, in which multiple fume inlets attached to wearable articles are fluidly coupled via a fume duct to a suction source, in accordance with aspects of this disclosure.

### DETAILED DESCRIPTION

Conventional fume extraction methods capture particulates and/or gases that are emitted during the welding process. Such methods may involve downdraft tables, fume hoods, fume extraction arms, fume extraction nozzles, and/or fume extraction guns. In each of these conventional fume extraction methods, a vacuum source is used to draw welding fume away from the weld operator and into some form of ducting leading to a collection device. Conventional downdraft tables and fume hoods are generally in a fixed position either below or above the work area. Downdraft tables and fume hoods tend to be physically large, draw in a lot of air from wide areas surrounding the welder, and have fume inlets that are relatively far from the fume generation point. As a result, downdraft tables and fume hoods tend to be less efficient at capturing weld fume. Conventional fume extraction arms and fume extraction nozzles are generally smaller than fume hoods and allow the welder to position the fume inlet closer to the fume generation point, which increases fume collection efficiency. However, extraction arms and nozzles can lose efficiency unless they are frequently or continually repositioned by the welder to minimize the inlet distance from the welding arc. Conventional fume extraction guns incorporated fume extraction ducting into the welding gun, locating the fume inlet on the welding gun near, and moving the fume inlet with, the fume generation point. However, fume extraction guns can degrade the ergonomics of the welding gun, reduce visibility of the weld operator to the weld puddle, and/or potentially extract or display shielding gas and result in porosity.

Disclosed example fume extraction systems provide fume extraction attached to wearable articles on the weld operator. Example wearable article to which fume extraction may be added or attached include welding gloves, which are located relatively close to, and move along with, the fume generation point. For example, because the weld operator typically has one or both hands in contact with the welding gun during fume generation, the location of a fume inlet on one or both welding gloves provides a method of source capture that improves collection efficiency while reducing certain drawbacks of the conventional fume gun approach.

The fume inlet of a fume extractor is affixed (removably or permanently) to a welding glove. Ducting (e.g., hose, conduit) extends from the glove to the fume collection unit. Example ducting may be in the form of a flexible hose, which may be detachable from the glove.

In some examples, the ducting is removably or permanently anchored to the arm or other portion of a welding jacket to reduce or avoid interference between the ducting and the welding process.

In the welding fume collection apparatus, the wearable article includes a welding glove. The fume inlet is attached to a back of the hand of the welding glove. In some examples, the fume inlet is detachably attached to the wearable article. In some other examples welding fume collection apparatus, the fume inlet is integral to the wearable article.

In some example welding fume collection apparatus, the fume inlet is coupled to the fume duct via at least one of a quick disconnect connection or a hose clamp. In some example welding fume collection apparatus, the fume duct includes a fastener configured to attach the fume duct to at least one of a welding cable or a second wearable article. In some example welding fume collection apparatus, the wearable article is a jacket.

Some example welding fume collection apparatus further include a switch configured to control the suction source and attached to at least one of the wearable article, the fume inlet, or the fume duct. Some example welding fume collection apparatus further include a damper configured to adjust a flow volume through at least one of the fume inlet or the fume duct.

Disclosed example fume collection systems include: a suction source and a welding fume collection apparatus as described before.

In some example fume collection systems, the wearable article is the welding glove. Some example fume collection systems further include: a second welding glove; a second fume inlet attached to the second welding glove; and a second fume duct configured to couple the second fume inlet to the suction source or a second suction source. In some example fume collection systems, the fume inlet is attached to a back of the hand of the welding glove.

In some example fume collection systems, the fume inlet is coupled to the fume duct via at least one of a quick disconnect connection or a hose clamp. In some example fume collection systems, the fume inlet is detachably attached to the wearable article. In some example fume collection systems, the fume inlet is integral to the wearable article.

In some example fume collection systems, the fume duct comprises a fastener configured to attach the fume duct to at least one of a welding cable or a second wearable article. Some example fume collection systems further include a switch configured to control the suction source and attached to at least one of the wearable article, the fume inlet, or the fume duct. Some example fume collection systems further include a damper configured to adjust a flow volume through at least one of the fume inlet or the fume duct.

Compared with conventional downdraft tables and fume hoods, disclosed example fume extraction systems are in relatively close proximity to the fume generation source, and are more efficient at fume collection. Additionally, disclosed fume extraction systems are significantly smaller and less expensive than larger systems. Compared with conventional fume extraction arms and nozzles, disclosed example fume extraction systems are smaller, and naturally causes the fume inlet to travel along with the fume generation source. Compared with conventional fume extraction guns, disclosed example fume extraction systems are less limited in inlet size, ducting size, and/or collection capabilities. Further, disclosed example fume extraction systems allow a weld operator some flexibility in positioning the wearable article and attached fume inlet relative to the welding gun and fume generation point, such that the fume extraction can be adjusted via relative positioning in addition to methods such as damping, bypassing, or throttling.

As used herein, "airborne components" discussed in the present disclosure may include any substance that is borne by, suspended in or otherwise carried by the air, or more generally the fluid present in the area considered. Depending upon the application, the airborne components may be in an aerosol form, such as solid, liquid or gaseous phase particles that are suspended in air. Such airborne components may form smoke, fumes (including chemical fumes), or clouds present or given off by an operation ongoing in the area, whether or not visible to the human operators. In other applications, the airborne components may be at least temporarily airborne but not suspended in the air, such as in the case of larger particulate, such as droplets, mist (e.g., from oils, coolants, and so forth), dust (e.g., from drywall, grain, minerals, cements, or other dust sources), chips, debris, and so forth. The present techniques are directed to collecting and extracting any such airborne components in the manners described. Similarly, reference is made in this disclosure to "air" or "airborne", although the fluid in which the airborne components are found and that is circulated by the system may be, more generally, a gaseous substance that need not contain the same constituents, or in the same ratios as found in atmospheric air. Such gasses are intended nevertheless be included in the term "air" or "airborne". Moreover, it is presently contemplated that the same principles of fluid dynamics and borne component removal may be applied to other "fluids" than air or gasses (including liquids), and to that extent the teachings of the present disclosure are intended to extend to those applications.

As used herein, a "circuit" includes any analog and/or digital components, power and/or control elements, such as a microprocessor, digital signal processor (DSP), software, and the like, discrete and/or integrated components, or portions and/or combinations thereof.

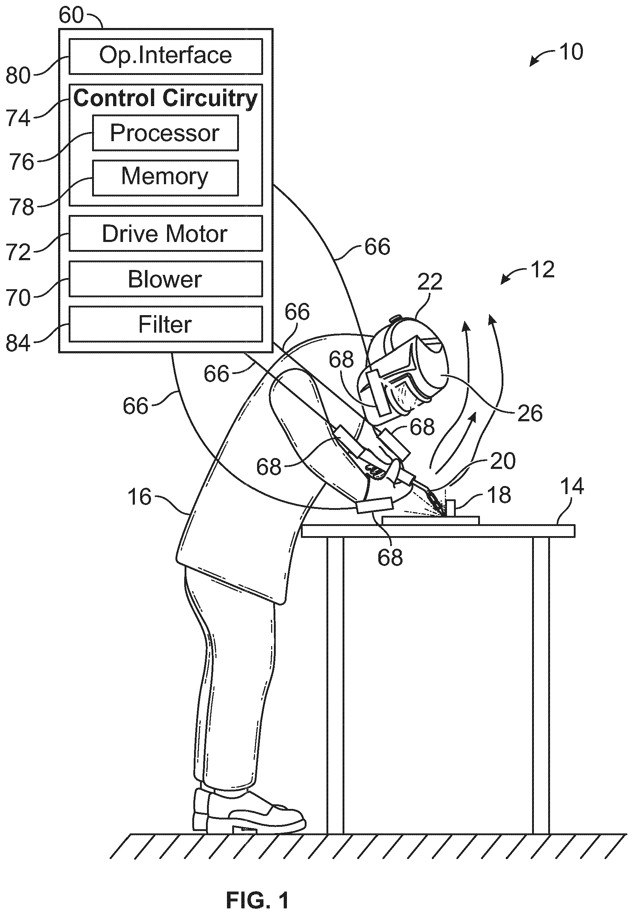

Turning now to the figures, FIG. 1 illustrates one embodiment of a fume extraction system 10 being used during a welding operation. It should be understood however, that welding is merely an example and that a wide range of industrial, commercial, hobby and other applications may result in fumes, smoke, or other airborne components that can be removed by the extraction system 10. Metal working operations, for example, cutting, welding, soldering, assembly, and other processes may generate smoke, particulate, and fumes. In machine shops, woodworking shops, worksites where cutting, sanding and other operations are performed, dust, fumes, particulate and other types of airborne components may be generated that it may be desirable to collect and extract from work areas and controlled spaces. In some applications, the extraction system 10 is placed in the work area 12 (e.g., work cell), in the vicinity of (e.g., above) the work surface 14. As a user 16 (e.g., a welder) performs a work operation (e.g., a welding operation) on a workpiece 18 using a tool 20 (e.g., welding torch), the extraction system 10 may draw fumes and smoke from the work area 12. The user may utilize a helmet 22 (e.g., welding helmet) or other protective headwear.

The example helmet 22 includes a window 26, which may be a transparent, translucent, or opaque material. For example, the window 26 may be a completely transparent or tinted materials that allows the user 16 to directly view the work surface 14 and the tool 20 during the performance of the work operation. In some examples, the window 26 may include one or more displays (e.g., LCD, plasma, virtual reality, augmented reality, LEDs, and the like), which may provide the user 16 with information while performing the work operation. In other examples, the window 26 is completely opaque, but includes a display that shows video from a camera or a virtual reality setting that allows the user 16 to see what he or she is doing. In some examples, the window 26 is be transparent or translucent and have a display overlaid on the window 26 to provide alerts, metrics, or an augmented reality setting for the user 16.

The extraction system 10 shown in FIG. 1 includes a negative pressure generator 60 to generate negative pressure (e.g., to create a negative pressure source). The negative pressure generated by the negative pressure generator 60 may be directed toward the work area 12. The negative pressure generator 60 is coupled to one or more conduits 66 that channel air from a fume extractor 68. To locate the negative pressure in the vicinity of the location of fume generation (e.g., at the arc), the fume extractor 68 is coupled to a wearable article of the operator, such as on a welding glove. This wearable article, e.g. the glove, of the operator is naturally positioned at or near the work area 12 and, when the base unit is activated, serves to create negative pressure zone of air closely situated to the work area 12 to extract the workspace air 62, which is directed to the negative pressure generator 60 for processing.

The negative pressure generator 60 may be implemented as a stand-alone base unit, on a movable cart-type unit, a fixed installation unit, a wearable unit worn by the operator, and/or any other physical configuration. The negative pressure generator 60 may serve a simple work area 12 or multiple weld cells or other work areas, such as via common conduits that draw air and airborne components from multiple work areas 12. Operator controls for the negative pressure generator may be located on the negative pressure generator 60 or remotely, such as on the fume extractor(s) 68 worn by the operator.

The example negative pressure generator 60 includes a blower 70, or other negative pressure gas stream source, such as a squirrel-cage blower, driven by a drive motor 72. The drive motor 72 is controlled by control circuitry 74, which may provide drive signals to the motor for fixed-speed and/or variable-speed operation. The base unit 64 may be designed to draw power from any source, such as the power grid, battery sources, engine-generator sets, and so forth. The control circuitry 74 typically includes a processor 76 and memory 78 for carrying out drive operations as desired by the operator or in response to system inputs as described below. Accordingly, the control circuitry 74 may communicate with an operator interface 80 for receiving operator settings, speed settings, on-off commands, and so forth. Similarly, the control circuitry 74 may communicate with a remote interface designed to receive signals from remote inputs, remote systems, and so forth. The remote interface may also provide data to such remote systems such as for monitoring and/or controlling operation of the negative pressure generator 60, and in some cases the entire extraction system 10.

The conduit 66 extending between the negative pressure generator 60 and the fume extractor 68 is a negative pressure air conduit. In general, the negative pressure air conduit 66 is under a negative or slight suction pressure to draw air containing the airborne components from the work area 12. The air flowing from the conduit 66 may be directed through a suction filter 84 before being introduced into the blower 70. The air may then be reintroduced to the workspace, recirculated in the local environment, or expelled from the local environment.

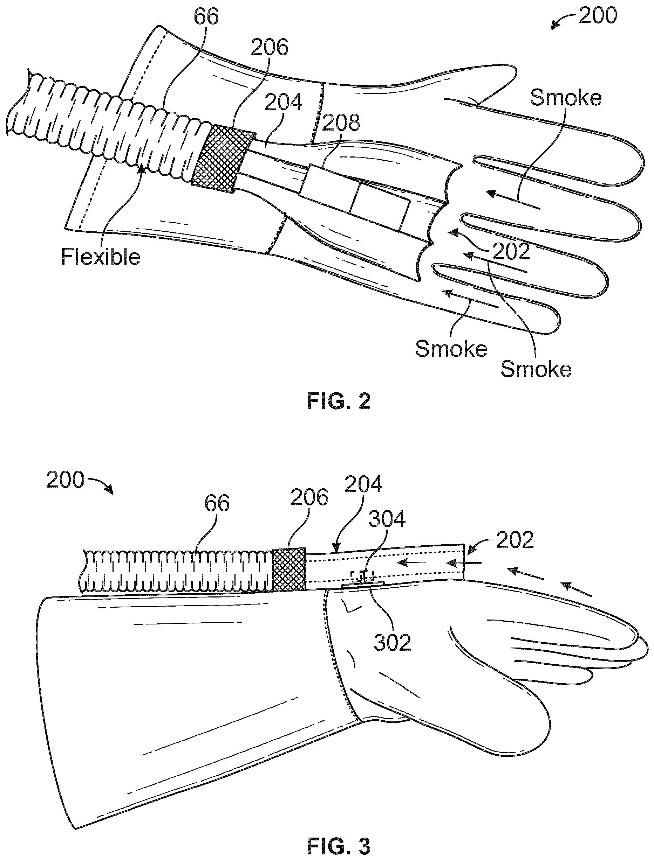

FIG. 2 is a top view of example according to the present invention, of a wearable article 200, in the form of a welding glove, having a fume inlet 202 attached to the wearable article 200 and a fume duct 204 configured to couple the fume inlet 202 to a suction source. FIG. 3 is a side view of the example wearable article 200, fume inlet 202, and fume duct 204 of FIG. 2. The example wearable article 200 includes the fume inlet 202 attached to a back side of the hand of the glove. The fume inlet 202 may be integrally, permanently, or removably attached to the article 200, such as by sewing, gluing or otherwise adhering, pinning, clipping, and/or otherwise attaching the fume inlet 202 to the article 200. In some examples, attachment points (e.g., clips, studs, etc.) may be incorporated into the article, and the fume inlet 202 is detachably connected to the attachment points. In other examples, the glove (or other article) may be manufactured to integrate the fume inlet 202 into one or more desired locations on the article 200. In some examples, the location of the fume inlet 202 with respect to the article 200 may be adjustable, such as moving the fume inlet 202 further toward or away from the fingers of a glove, or laterally across the glove, toward or away from the thumb.

By attaching the fume inlet 202 to a wearable article such as the welding glove, the fume inlet 202 has a relatively consistent position with respect to the work area 12, and therefore has a consistent fume extraction performance over the course of a moving fume generation location (e.g., the arc). The fume inlet 202 may have any desired shape or profile based on the location, shape, and/or purpose of the wearable article 200. For example, a fume inlet 202 positioned on the back of a welding glove may have a relatively wide and/or relatively flattened profile. A flattened profile reduces or prevents obstruction of the operator's view and/or to maintain flexibility in the welding glove, while a widened profile reduces the flow speed and/or increases the volume from which the fumes are extracted. In contrast, a fume inlet 202 attached to a welding jacket may have a taller cross-section or profile to obtain a larger extraction volume.

The example fume duct 204 couples the fume inlet 202 to a suction or negative pressure source, such as the negative pressure generator 60 of FIG. 1. For example, the fume duct 204 may be coupled to one or more conduits 66, such as one or more suction hoses. To enable use of the article 200 without suction, the fume duct 204 may be removably coupled to the conduit 66, such as via a quick disconnect coupling 206 (shown in FIG. 2), via a hose clamp, and/or via any other hose attachment technique.

The example wearable article 200 may further include a switch 208 and/or other control device to remotely control the negative pressure generator 60 connected to the fume duct 204. For example, the switch 208 may be wirelessly coupled (e.g., paired) to the negative pressure generator 60. Additionally or alternatively, the switch 208 may be coupled via a wired connection, such as via a bus connection made at the same time or adjacent to the connection of the conduit 66 to the fume duct 204. The switch 208 may be attached to the wearable article 200, to the fume inlet 202, and/or to the fume duct 204.

The fume inlet 202 and the fume duct 204 may be attached to other types of wearable articles, such as being attached to the sleeves of a welding jacket, the front of a welding jacket, the shoulders or collar of a welding jacket, and/or to the outer surface of a welding helmet. For example, the fume inlet 202 may be attached or integral to the outer shell of a welding helmet. In some examples, the fume inlet 202 may be positioned so as to draw fumes (via the negative pressure) away from volumes of air which may be breathed by the operator using an unsealed welding helmet, such as toward a top of the helmet and/or away from a lower area of the helmet.

In some examples, the wearable article 200 includes strengthening, stiffening, or other reinforcement to reduce or prevent distortion of the wearable article 200, such as by forces applied by the conduit 66 on the fume duct 204.

The fume duct 204 may include a fastener to attach the fume duct 204 (e.g., directly or via the conduit 66) to a welding cable and/or to a different wearable article. For example, a fastener may guide the conduit 66 from the fume duct 204 along the sleeve, down the front, or down the back, of a welding jacket. The conduit 66 may be routed into an outer jacket of the welding gun cable and/or another welding cable conducting welding current, and split from the welding cable to extend to the negative pressure generator 60. Fasteners or other guidance of the conduit 66 by a welding cable may improve hose management and/or reduce interference between the conduit 66 and motion of the operator.

Either or both of the fume inlet 202 or the fume duct 204 may include a damper to adjust a flow volume through the fume inlet 202 or the fume duct 204. The damper may permit the operator to easily adjust the negative pressure and/or flow applied to draw fumes, such as to reduce the potential for shielding gas to be drawn into the fume inlet 202. The damper may adjust the surface area of the fume inlet 202 and/or adjust a bypass air path to control the portion of the negative air pressure which is drawn from the fume inlet 202 and the bypass air path. For example, a completely closed bypass air path (via the damper) causes all of the negative air pressure to be applied to the fume inlet 202, while increasing the opening of the bypass air path reduces the negative air pressure which is applied to the fume inlet 202.

The article 200 may further include one or more sensors. The one or more sensors may be configured to measure one or more parameters indicative of the working environment or other parameters related to the work operation (e.g., fumes, temperature, humidity, light, motion, etc.), and provide the measurements to a control device or the negative pressure generator 60 to control fume extraction. For example, the sensor data (e.g., light intensity, temperature, motion detection) may be used to trigger and/or adjust the generation of negative pressure by the negative pressure generator 60.

FIG. 3 illustrates an example fastener 302 which may be retrofit onto a welding glove and used to attach the fume inlet 202 and fume duct 204. The fastener 302 interfaces with and secures a corresponding fastener or attachment point 304 on the fume duct 204 to retain the fume duct 204 and the fume inlet 202 on the welding glove. The glove may be provide with any number of fasteners 302 to engage the fume duct 204. In some examples, the fasteners may be configured to be pushed through the glove material for installation and to allow positioning of the fume inlet 202 at the desired location on the glove.

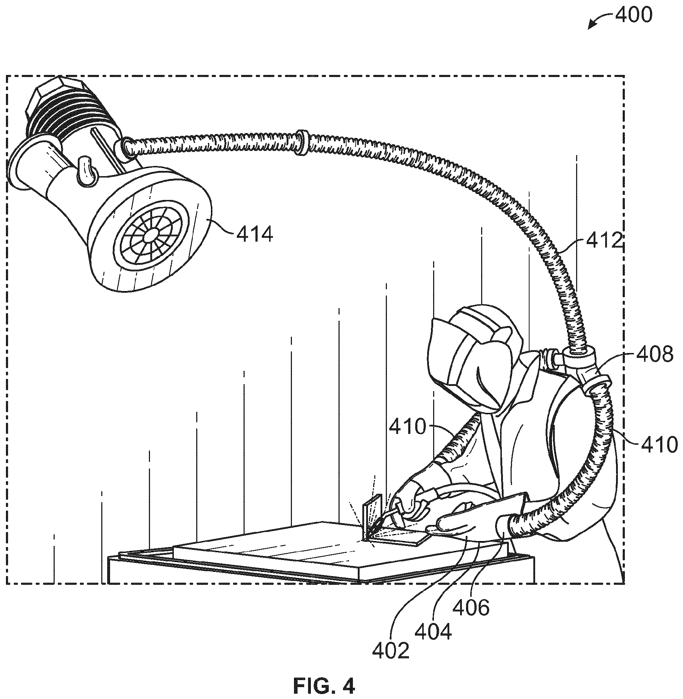

FIG. 4 illustrates another example fume extraction system 400, in which multiple wearable articles 402 include respective fume inlets 404 which are fluidly coupled via respective fume ducts 406 to a suction source (e.g., the negative pressure generator 60 of FIG. 1). In the example of FIG. 4, the fume ducts 406 are coupled to a Y-connector 408 (or other manifold) via hoses 410. The Y-connector 408 further connects to the suction source via a hose 412.

In the example of FIG. 4, suction from a single suction source may include or be directed through a zone extractor 414. An example zone extractor 414 may be a FILTAIR^{®} Capture 5 Fume Extraction System, sold by Miller Electric Manufacturing Co., or any other fume extraction system which captures air and fume from a larger volume (e.g., a weld-cell sized volume). In some examples, the zone extractor 414 includes valves, dampers, or other control devices to control whether negative pressure is directed via zone capture, local capture at the fume inlets 404a, 404b on the wearable articles 402a, 402b, and/or a combination of zone capture and local capture. In some such examples, the negative pressure generator 60 (e.g., internal to the zone extractor 414, separate from the zone extractor 414) may adjust the amount of negative pressure generated based on whether zone capture and/or local capture are selected for conduction of the negative pressure.

The Y-connector 408 may be attached to the operator, such as via a harness, straps, or other attachment device, to keep the Y-connector 408 and the hoses 410, 412 from interfering with the movement of the operator or the welding equipment.

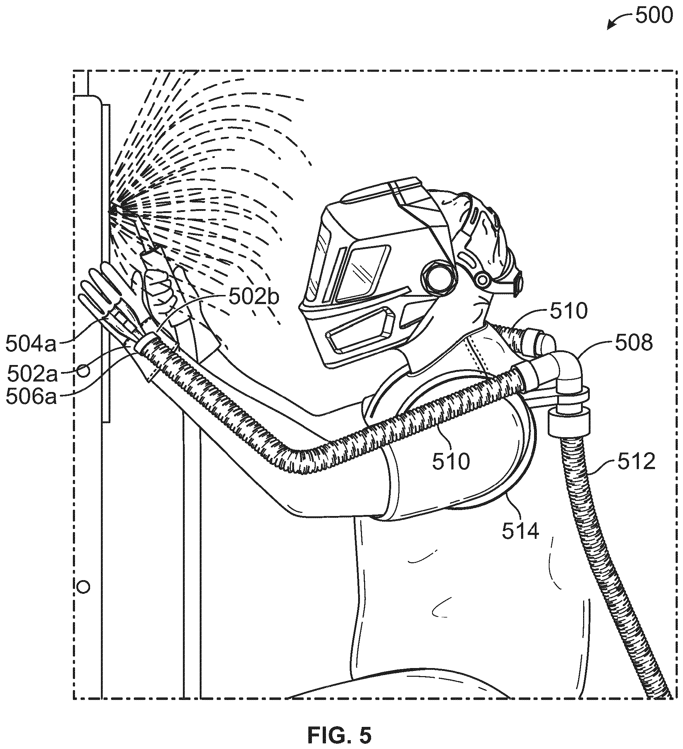

FIG. 5 illustrates another example fume extraction system 500, in which multiple wearable articles 502 include respective fume inlets 504 which are fluidly coupled via respective fume ducts 506 to a suction source (e.g., the negative pressure generator 60 of FIG. 1). In the example of FIG. 4, the fume ducts 506 are coupled to a Y-connector 508 (or other manifold) via hoses 510. The Y-connector 508 further connects to the suction source via a hose 512. Instead of being routed to a zone extractor as in FIG. 4, the example hose 512 may be routed to a wearable collection unit or to a remote collection unit. The Y-connector 508 may be attached to the operator, such as via a harness 514, straps, or other attachment device, to keep the Y-connector 508 and the hoses 510, 512 from interfering with the movement of the operator or the welding equipment.

As noted above, the present techniques may allow for adjustment of the negative pressure air flow to adapt operation of the system 10 to specific operations. For example, a negative pressure air adjustment may be provided before the suction filter 84. This adjustment may comprise, for example, a bypass valve, a louver, or other mechanical device which may be adjusted to limit the flow of air from the suction filter and, consequently, the intake of air into the blower 70 from the ambient surroundings. In some cases, the negative pressure air adjustment may allow some air to exit to the environment, as illustrated in FIG. 1. Negative pressure air adjustment may allow for relative mass or volumetric flow rates of the negative pressure airstream to enhance creation of the air region and extraction of workspace air. The negative pressure air adjustment may involve manual adjustment and/or automatic control via inputs (e.g., via the control circuitry 74, based on data from sensors on wearable articles 200, etc.). Controls may be provided on the operator interface 80, such as through adjustment dials, membrane switches, operator touch controls, and/or other inputs. Manual and/or electronic adjustment of one or both airstreams may be provided at the fume extractor(s) 68. Electronic adjustments or inputs are communicated from the fume extractor 68 to the control circuitry 74. The control circuitry 74 may be coupled to negative pressure air adjustment devices (e.g., via small adjustment motors and actuator assemblies). Additionally or alternatively, negative pressure air adjustments to flow rates may be made by altering the speed of one or more motors and/or blowers, fans, and/or compressors.

It should also be noted that a system may be adapted to exchange data with other system components, such as a welding/plasma cutting or other system. The welding/plasma cutting system may include, for example, welding or plasma cutting power supplies, wire feeders, shielding gas supplies, and so forth. In other metal working settings, the system may include various other manual and machine tools. In still other settings, the system may include various robots, production lines, power tools (e.g., saws, workstations, etc.). These will typically be coupled to the operation to accomplish the desired task on a workpiece 18. Certain of these systems may be capable of providing control signals to the extraction system to allow for turning the extraction system on and off, regulating speeds and air flows, and so forth. Such communications may be provided via suitable cabling or by other means by wireless communications.

While the present welding fume collection apparatus and fume collection system have been described with reference to certain implementations, it will be understood by those skilled in the art that various changes may be made and equivalents may be substituted without departing from the scope of the present invention as defined in the appended claims.

## Claims

1. A welding fume collection apparatus, comprising:
a wearable article (200);
a fume inlet (202) attached to the wearable article (200); and
a fume duct (204) configured to couple the fume inlet (202) to a suction source;
**characterised in that** :
the wearable article (200) comprises a welding glove, and wherein the fume inlet (202) is attached to a back of the hand of the welding glove.

2. The welding fume collection apparatus as defined in claim 1, wherein the fume inlet (202) is detachably attached to the wearable article (200),

3. The welding fume collection apparatus as defined in claim 1 or claim 2, wherein the fume inlet (202) is integral to the wearable article (200).

4. The welding fume collection apparatus as defined in claim 1, wherein the fume inlet (202) is coupled to the fume duct (204) via at least one of a quick disconnect connection or a hose clamp.

5. The welding fume collection apparatus as defined in claim 1, wherein the fume duct comprises a fastener configured to attach the fume duct to at least one of a welding cable or a second wearable article and optionally wherein the wearable article (200) is a jacket.

6. The welding fume collection apparatus as defined in claim 1, further comprising a switch configured to control the suction source and attached to at least one of the wearable article (200), the fume inlet (202), or the fume duct (204), or
the welding fume collection apparatus further comprising a damper configured to adjust a flow volume through at least one of the fume inlet (202) or the fume duct (204).

7. A fume collection system, comprising:
a suction source;
the fume collection system being **characterised by**:
welding fume collection apparatus according to any preceding claim.

8. The fume collection system as defined in claim 7, wherein the wearable article (200) is the welding glove.

9. The fume collection system as defined in claim 8, further comprising:
a second welding glove;
a second fume inlet (202) attached to the second welding glove; and
a second fume duct (204) configured to couple the second fume inlet (202) to the suction source or a second suction source.

10. The fume collection system as defined in claim 8, wherein the second fume inlet (202) is attached to a back of the hand of the second welding glove.

11. The fume collection system as defined in claim 7, wherein the fume inlet (202) is coupled to the fume duct (204) via at least one of a quick disconnect connection or a hose clamp.

12. The fume collection system as defined in claim 7, wherein the fume inlet (202) is detachably attached to the wearable article (200), or
wherein the fume inlet (202) is integral to the wearable article (200).

13. The fume collection system as defined in claim 7, wherein the fume duct (204) comprises a fastener (302) configured to attach the fume duct (204) to at least one of a welding cable or a second wearable article (402).

14. The fume collection system as defined in claim 7, further comprising a switch configured to control the suction source and attached to at least one of the wearable article (200), the fume inlet (202), or the fume duct (204), or
the fume collection system further comprising a damper configured to adjust a flow volume through at least one of the fume inlet (202) or the fume duct (204).

## Patentansprüche

1. Schweißrauchsammelvorrichtung, umfassend:
einen tragbaren Artikel (200);
einen Raucheinlass (202), der an dem tragbaren Artikel (200) angebracht ist; und
eine Rauchrohrleitung (204), die dazu eingerichtet ist, den Raucheinlass (202) mit einer Saugquelle zu koppeln;
**dadurch gekennzeichnet, dass**:
der tragbare Artikel (200) einen Schweißhandschuh umfasst, und wobei der Raucheinlass (202) an einer Rückseite der Hand des Schweißhandschuhs angebracht ist.

2. Schweißrauchsammelvorrichtung nach Anspruch 1, wobei der Raucheinlass (202) lösbar an dem tragbaren Artikel (200) angebracht ist.

3. Schweißrauchsammelvorrichtung nach Anspruch 1 oder Anspruch 2, wobei der Raucheinlass (202) einstückig mit dem tragbaren Artikel (200) ausgebildet ist.

4. Schweißrauchsammelvorrichtung nach Anspruch 1, wobei der Raucheinlass (202) über mindestens eines von einer Schnelltrennverbindung oder einer Schlauchklemme mit der Rauchrohrleitung (204) gekoppelt ist.

5. Schweißrauchsammelvorrichtung nach Anspruch 1, wobei die Rauchrohrleitung ein Befestigungselement umfasst, das dazu eingerichtet ist, die Rauchrohrleitung an mindestens einem von einem Schweißkabel oder einem zweiten tragbaren Artikel anzubringen, und wobei der tragbare Artikel (200) optional ein Mantel ist.

6. Schweißrauchsammelvorrichtung nach Anspruch 1, die ferner einen Schalter umfasst, der dazu eingerichtet ist, die Saugquelle zu steuern, und der an mindestens einem von dem tragbaren Artikel (200), dem Raucheinlass (202) oder der Rauchrohrleitung (204) angebracht ist, oder
wobei die Schweißrauchsammelvorrichtung ferner einen Dämpfer umfasst, der dazu eingerichtet ist, ein Durchflussvolumen durch mindestens einen von dem Raucheinlass (202) und der Rauchrohrleitung (204) anzupassen.

7. Rauchsammelsystem, umfassend:
eine Saugquelle;
wobei das Rauchsammelsystem **gekennzeichnet ist durch**:
eine Schweißrauchsammelvorrichtung nach einem der vorhergehenden Ansprüche.

8. Rauchsammelsystem nach Anspruch 7, wobei der tragbare Artikel (200) der Schweißhandschuh ist.

9. Rauchsammelsystem nach Anspruch 8, ferner umfassend:
einen zweiten Schweißhandschuh;
einen zweiten Raucheinlass (202), der an dem zweiten Schweißhandschuh angebracht ist; und
eine zweite Rauchrohrleitung (204), die dazu eingerichtet ist, den zweiten Raucheinlass (202) mit der Saugquelle oder einer zweiten Saugquelle zu koppeln.

10. Rauchsammelsystem nach Anspruch 8, wobei der zweite Raucheinlass (202) an einer Rückseite der Hand des zweiten Schweißhandschuhs angebracht ist.

11. Rauchsammelsystem nach Anspruch 7, wobei der Raucheinlass (202) über mindestens eines von einer Schnelltrennverbindung oder einer Schlauchklemme mit der Rauchrohrleitung (204) gekoppelt ist.

12. Rauchsammelsystem nach Anspruch 7, wobei der Raucheinlass (202) lösbar an dem tragbaren Artikel (200) angebracht ist, oder
wobei der Raucheinlass (202) einstückig mit dem tragbaren Artikel (200) ausgebildet ist.

13. Rauchsammelsystem nach Anspruch 7, wobei die Rauchrohrleitung (204) ein Befestigungselement (302) umfasst, das dazu eingerichtet ist, die Rauchrohrleitung (204) an mindestens einem von einem Schweißkabel oder einem zweiten tragbaren Artikel (402) anzubringen.

14. Rauchsammelsystem nach Anspruch 7, das ferner einen Schalter umfasst, der dazu eingerichtet ist, die Saugquelle zu steuern, und der an mindestens einem von dem tragbaren Artikel (200), dem Raucheinlass (202) oder der Rauchrohrleitung (204) angebracht ist, oder
wobei das Rauchsammelsystem ferner einen Dämpfer umfasst, der dazu eingerichtet ist, ein Durchflussvolumen durch mindestens einen von dem Raucheinlass (202) und der Rauchrohrleitung (204) anzupassen.

## Revendications

1. Appareil de collecte de fumée de soudage, comprenant :
un article portable (200) ;
une entrée de fumée (202) fixée à l'article portable (200) ; et
un conduit de fumée (204) configuré pour coupler l'entrée de fumée (202) à une source d'aspiration ;
**caractérisée en ce que** :
l'article portable (200) comprend un gant de soudage, et dans lequel l'entrée de fumée (202) est fixée à l'arrière de la main du gant de soudage.

2. Appareil de collecte de fumée de soudage selon la revendication 1, dans lequel l'entrée de fumée (202) est fixée de manière amovible à l'article portable (200).

3. Appareil de collecte de fumée de soudage selon la revendication 1 ou la revendication 2, dans lequel l'entrée de fumée (202) est solidaire de l'article portable (200).

4. Appareil de collecte de fumée de soudage selon la revendication 1, dans lequel l'entrée de fumée (202) est couplée au conduit de fumée (204) par l'intermédiaire de l'au moins un raccord à déconnexion rapide ou d'un collier de serrage.

5. Appareil de collecte de fumée de soudage selon la revendication 1, dans lequel le conduit de fumée comprend une attache configurée pour fixer le conduit de fumée à l'au moins un élément parmi un câble de soudage ou un deuxième article portable et facultativement dans lequel l'article portable (200) est une gaine.

6. Appareil de collecte de fumée de soudage selon la revendication 1, comprenant en outre un commutateur configuré pour commander la source d'aspiration et fixé à l'au moins un de l'article portable (200), de l'entrée de fumée (202), ou du conduit de fumée (204), ou
l'appareil de collecte de fumée de soudage comprenant en outre un registre configuré pour ajuster un volume d'écoulement à travers l'au moins une de l'entrée de fumée (202) ou du conduit de fumée (204).

7. Système de collecte de fumée, comprenant :
une source d'aspiration ;
le système de collecte de fumée étant **caractérisé par** :
Appareil de soudage pour la collecte de fumée selon l'une quelconque des revendications précédentes.

8. Système de collecte de fumée selon la revendication 7, dans lequel l'article portable (200) est le gant de soudage.

9. Système de collecte de fumée selon la revendication 8, comprenant en outre :
un deuxième gant de soudage ;
une deuxième entrée de fumée (202) fixée au deuxième gant de soudage ; et
un deuxième conduit de fumée (204) configuré pour coupler la deuxième entrée de fumée (202) à la source d'aspiration ou à une deuxième source d'aspiration.

10. Système de collecte de fumée selon la revendication 8, dans lequel la deuxième entrée de fumée (202) est fixée à l'arrière de la main du deuxième gant de soudage.

11. Système de collecte de fumée selon la revendication 7, dans lequel l'entrée de fumée (202) est couplée au conduit de fumée (204) par l'intermédiaire de l'au moins un raccord à déconnexion rapide ou d'un collier de serrage.

12. Système de collecte de fumée selon la revendication 7, dans lequel l'entrée de fumée (202) est fixée de manière amovible à l'article portable (200), ou
dans lequel l'entrée de fumée (202) est intégrée à l'article portable (200).

13. Système de collecte de fumée selon la revendication 7, dans lequel le conduit de fumée (204) comprend une attache (302) configurée pour fixer le conduit de fumée (204) à l'au moins un élément parmi un câble de soudage ou un deuxième article portable (402).

14. Système de collecte de fumée selon la revendication 7, comprenant en outre un commutateur configuré pour commander la source d'aspiration et fixé à l'au moins un de l'article portable (200), de l'entrée de fumée (202) ou du conduit de fumée (204), ou
le système de collecte de fumée comprenant en outre un registre configuré pour ajuster un volume d'écoulement à travers l'au moins une de l'entrée de fumée (202) ou du conduit de fumée (204) .
